# EUROPEAN PATENT SPECIFICATION

(11) **EP 4 358 481 B1**
(45) Date of publication and mention of the grant of the patent: **18.06.2025**
(21) Application number: 22202931.6
(22) Date of filing: 21.10.2022
(51) Int. Cl.: H04L 41/0806, H04L 41/0895

(54) **COMMUNICATION SYSTEM AND METHODS FOR USING PROGRAMMABLE METASURFACES**
KOMMUNIKATIONSSYSTEM UND VERFAHREN ZUR VERWENDUNG PROGRAMMIERBARER METAOBERFLÄCHEN
SYSTÈME ET PROCÉDÉS DE COMMUNICATION POUR UTILISER DES MÉTASURFACES PROGRAMMABLES

(43) Date of publication of application: 24.04.2024
(73) Proprietor: NTT DOCOMO, INC., Chiyoda-Ku Tokyo 100-6150 (JP)
(72) Inventor: KATSALIS, Kostas, 80687 Munich (DE); TRIAY MARQUES, Joan, 80687 Munich (DE); KUNO, Yuya, Tokyo, 100-6150 (JP)
(74) Representative: Viering, Jentschura & Partner mbB Patent- und Rechtsanwälte

(56) References cited:
- EP-A1- 3 439 107
- STRINATI EMILIO CALVANESE ET AL: "Reconfigurable, Intelligent, and Sustainable Wireless Environments for 6G Smart Connectivity", IEEE COMMUNICATIONS MAGAZINE, IEEE SERVICE CENTER, PISCATAWAY, US, vol. 59, no. 10, 26 November 2021 (2021-11-26), pages 99 - 105, XP011889894, ISSN: 0163-6804, [retrieved on 20211126], DOI: 10.1109/MCOM.001.2100070
- ADLEN KSENTINI ET AL: "Toward Enforcing Network Slicing on RAN: Flexibility and Resources Abstraction", IEEE COMMUNICATIONS MAGAZINE., vol. 55, no. 6, 1 January 2017 (2017-01-01), US, pages 102 - 108, XP055565245, ISSN: 0163-6804, DOI: 10.1109/MCOM.2017.1601119
- DOCOMO COMMUNICATIONS LAB: "Release 6 Feature Proposal: New infrastructure", vol. ISG NFV Network Functions Virtualisation, 9 September 2022 (2022-09-09), pages 1 - 8, XP014439159, Retrieved from the Internet <URL:ftp://docbox.etsi.org/ISG/NFV/05-CONTRIBUTIONS/2022/NFV(22)000165_Release_6_Feature_Proposal__New_infrastructure.docx> [retrieved on 20220909]

## Description

The present disclosure relates to communication systems and methods for using programmable metasurfaces.

Modern communication systems include a high amount of communication system resources which may be used by multiple network slice instances and/or multiple management systems (e.g. of different tenants) to provide communication functions. Since provision of communication system resources requires effort and cost, communication system resources should be efficiently used. One way to allow efficient usage is sharing of communication system resources. This in particular relates to programmable metasurfaces. Accordingly, approaches which allow efficient and flexible sharing of programmable metasurfaces, e.g. between network slices or generally management systems which may be associated with different resource consumers (such as tenants), are desirable.

The publication EP 3 439 107 A1 describes a metasurface where different functions may be assigned to different areas of the metasurface.

The publication by Strinati Emilio Calvanese et al. "Reconfigurable, Intelligent, an Sustainable Wireless Environments for 6G Smart Connectivity", IEEE Communications Magazine, IEEE Service Center, Piscataway, US, vol. 59, no. 10, 26 November 2021, pages 99-105, describes a wireless connectivity paradigm comprising negligible-power RISs (Reconfigurable Intelligent Surfaces) and conventional network nodes. This paradigm aims at jointly optimizing the radio wave propagation environment with an existing network infrastructure to realize highly concentrated service provisioning to intended end-users, while removing energy from regions where accidental or non-intended users are present.

The publication by Adlen Ksentini et al. "Toward Enforcing Network Slicing on RAN: Flexibility and Resources Abstraction", IEEE Communications Magazine, vol. 55, no. 6, 1 January 2017, pages 102-108 discusses network slicing on a radio access network.

The publication by Docomo Communications Lab "Release 6 Feature Proposal: New infrastructure", ETSI Draft NFV(22)000165, European Telecommunications Standards Institute (ETSI), 650, Route des Lucioles; F-06921 Sophia-Antipolis, France, vol. ISG NFV Network Functions Virtualisation 9 September 2022, pages 1-8 discusses use cases related to how a network function virtualization can consider new types of infrastructure resources.

According to one embodiment, a communication system is provided including a programmable metasurface configured to provide communication resources and a metasurface virtualization component configured to
- create multiple virtual programmable metasurfaces, wherein each virtual programmable metasurface is associated with a respective portion of the communication resources provided by the programmable metasurface;
- expose the virtual programmable metasurfaces to one or more managing components as (e.g. a virtual) resource to provide one or more communication functions; and
- for each virtual programmable metasurface for which the one or more management components have requested provision of a respective communication function, control the programmable metasurface to provide the requested communication function by means of the portion of the communication resources provided by the programmable metasurface associated with the virtual programmable metasurface
wherein the communication resources comprise time slots, frequency ranges and/or phases for communicating via the programmable metasurface and wherein the metasurface virtualization component is configured to ensure that communication functions requested to be provided by different ones of the virtual programmable metasurfaces are provided by different portions of the communication resources provided by the programmable metasurface by time multiplexing, frequency multiplexing and/or phase multiplexing, respectively.

According to a further embodiment, a method for using a programmable metasurface according to the communication system described above is provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a mobile radio communication system.
- Figure 2: shows an architecture including a Network Functions Virtualisation Management and Orchestration (NFV-MANO) Architectural Framework.
- Figure 3: illustrates a VNF sharing scenario where a NS (Network Service) is shared between two different tenants.
- Figure 4: illustrates a sharing scenario where two network services are shared between two network slices subnet instances.
- Figure 5: illustrates network slicing in 3GPP from a management perspective.
- Figure 6: illustrates slice management from a MANO perspective.
- Figure 7: shows a programmable metasurface (PMS).
- Figure 8: illustrates an architecture including a PMS-Hypervisor (PMS-H) 801.
- Figure 9: shows a PMS Hypervisor (PMS-H) in more detail.
- Figure10: illustrates the shared use of one or more PMSs by two network slices or tenants.
- Figure 11: illustrates an example of slice management of a PMS-aware system.
- Figure 12: illustrates vPMS migration operations.
- Figure 13: illustrates the addition of PMS management functionality by means of an additional slice subnet management domain.
- Figure 14: illustrates an alternative approach for the addition of the PMS virtualization functionality to a slice management system.
- Figure 15: shows a flow diagram for creation of a vPMS for a network slice.
- Figure 16: shows a flow diagram for release of a vPMS.
- Figure 17: shows variants of an architecture including a PMS-Hypervisor.
- Figure 18: shows a communication system according to an embodiment.
- Figure 19: shows a flow diagram illustrating a method for using a programmable metasurface in a communication system.

The following detailed description refers to the accompanying drawings that show, by way of illustration, specific details and aspects of this disclosure in which the invention may be practiced.

According to further embodiments, a computer program and a computer readable medium including instructions, which, when executed by a computer, make the computer perform the method of any one of the above examples are provided.

In the following, various examples will be described in more detail.

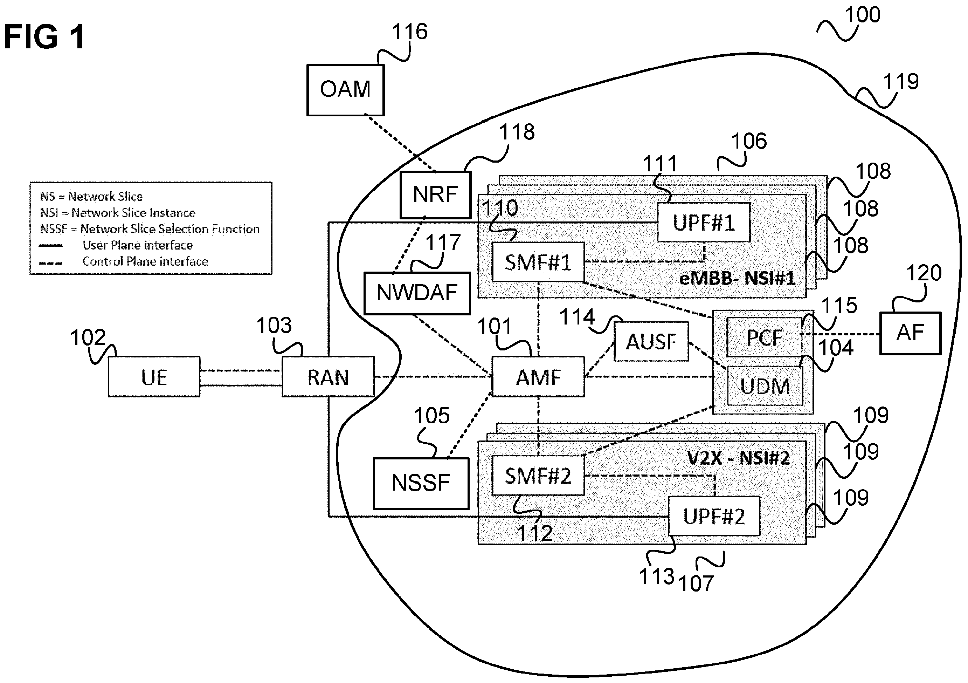

Figure 1 shows a mobile radio communication system 100, for example configured according to 5G (Fifth Generation) as specified by 3GPP (Third Generation Partnership Project) in simplified form.

The mobile radio communication system 100 includes a mobile radio terminal device 102 such as a UE (user equipment), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

Furthermore, the mobile radio communication system 100 includes a Radio Access Network (RAN) 103, which may include a plurality of radio access network nodes, i.e. base stations configured to provide radio access in accordance with a 5G (Fifth Generation) radio access technology (5G New Radio). It should be noted that the mobile radio communication system 100 may also be configured in accordance with LTE (Long Term Evolution) or another mobile radio communication standard (e.g. non-3GPP accesses like WiFi) but 5G is herein used as an example. Each radio access network node may provide a radio communication with the mobile radio terminal device 102 over an air interface. It should be noted that the radio access network 103 may include any number of radio access network nodes.

The mobile radio communication system 100 further includes a core network (5GC) 119 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 119 further includes an AUSF (Authentication Server Function) 114, a PCF (Policy Control Function) 115 and an AF (application function) 120.

The core network 119 may have multiple core network slices 106, 107 and for each core network slice 106, 107, the operator (also referred to MNO for Mobile Network Operator) may create multiple core network slice instances 108, 109. For example, the core network 119 includes a first core network slice 106 with three core network slice instances 108 for providing Enhanced Mobile Broadband (eMBB) and a second core network slice 107 with three core network slice instances (CNIs) 109 for providing Vehicle-to-Everything (V2X).

Typically, when a core network slice is deployed (i.e. created), network functions (NFs) are instantiated, or (if already instantiated) referenced to form a core network slice instance and network functions that belong to a core network slice instance are configured with a core network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

The RAN 103 and the core network 119 form the network side of the mobile radio communication system, or, in other words, form the mobile radio communication network. The mobile radio communication network and the mobile terminals accessing the mobile radio communication network form, together, the mobile radio communication system.

Like the core network 119, the RAN 103 may also be sliced, i.e. include multiple RAN slices. A RAN slice and a core network slice 106, 107 may be grouped to form a network slice.

In the following, "network slice" (or just "slice") generally refers to a core network slice but may also include a RAN slice or even a Transport network slice. In other words, each network slice may be made of network slice subnets like a RAN subnet, a core network subnet and a transport subnet.

An S-NSSAI (Single Network Slice Selection Assistance information) identifies a network slice and consists of:
- A Slice/Service type (SST), which refers to the expected Network Slice behaviour in terms of features and services;
- A Slice Differentiator (SD) which is optional information that complements the slice/service type(s) to differentiate amongst multiple network slices of the same slice/service type.

A network slice instance (NSI) is identified by an NSI ID.

NSSAI may include one or more S-NSSAIs.

Allowed NSSAI is NSSAI provided by the serving PLMN (Public Land Mobile Network) during e.g. a registration procedure, indicating the S-NSSAI values allowed by the network for a UE in the serving PLMN for the current registration area.

Configured NSSAI is NSSAI that has been provisioned in the UE. It may be applicable to one or more PLMNs.

Requested NSSAI is NSSAI that the UE provides to the network during registration in order to establish a PDU session to the requested network slice.

The mobile radio communication system 100 may further include an OAM (Operation, Administration and Maintenance) function (or entity) 116, e.g. implemented by one or more OAM servers which is connected to the RAN 103 and the core network 119 (connections are not shown for simplicity). The OAM 116 may include an MDAS (Management Data Analytics Service). The MDAS may for example provide an analytics report regarding network slice instance load. Various factors may impact the network slice instance load, e.g. number of UEs accessing the network, number of QoS flows, the resource utilizations of different NFs which are related with the network slice instance.

Further, the core network 118 includes an NRF (Network Repository Function).

The core network 119 may further include a Network Data Analytics Function (NWDAF) 117. The NWDAF is responsible for providing network analytics and/or prediction information upon request from network functions.

The various network functions can be implemented on specialized hardware, i.e. on so-called ACTA (Advanced Telecommunications Computing Architecture) devices. This means that the network functions are implemented as physical network functions deployed on special hardware. In that case, software for implementing the network function is strongly coupled with the hardware.

However, it may be desirable to implement network functions also on non-specialized hardware, i.e. as software applications running on virtual machines (and/or a container) deployed over COTS (Commercial off-the-shelf) servers (i.e. on general purpose or open computing platforms, i.e. devices). This is enabled by using virtualization technology (e.g., hypervisor, operating system (OS) containers etc.), which can be used to deploy network functions (e.g., SMF, PCF etc.) as software applications running on virtual machines (VMs) and/or containers. They are then referred to as virtual network functions (VNFs).

Management and orchestration (MANO) is a key element of the ETSI (European Telecommunications Standards Institute) network functions virtualization (NFV) architecture. NFV-MANO is an architectural framework that coordinates network resources for cloud-based applications and the lifecycle management of virtual network functions (VNFs) and network services. As such, it is crucial for ensuring rapid, reliable NFV deployments at scale. NFV-MANO includes several Functional Blocks and functions like the NFV orchestrator (NFVO), the VNF manager (VNFM), the virtual infrastructure manager (VIM) and the Container Infrastructure Service Management (CISM).

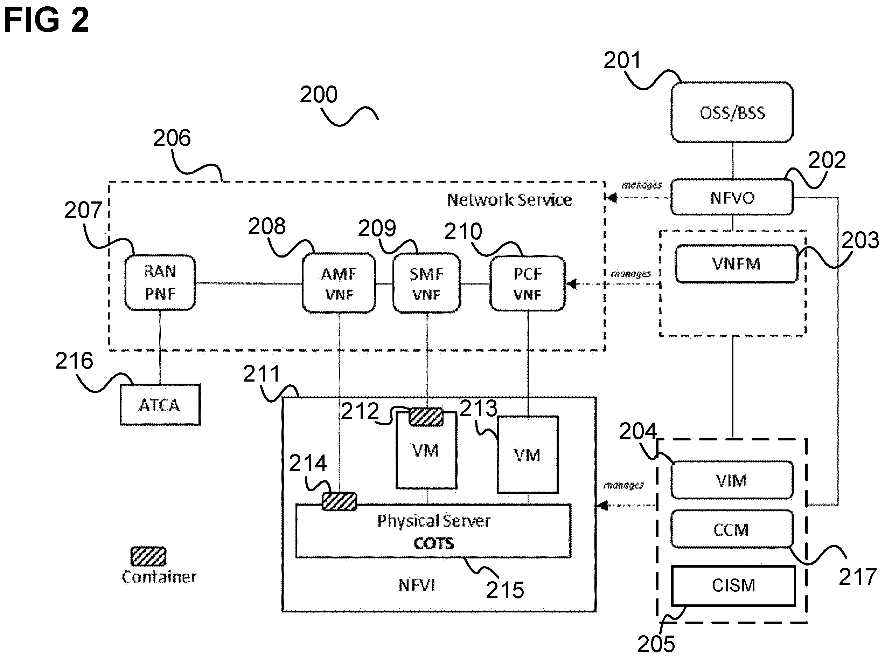

Figure 2 shows an architecture 200 including a simplified version of the Network Functions Virtualisation Management and Orchestration (NFV-MANO) Architectural Framework. It includes a collection of functional blocks and functions, data repositories used by these functional blocks, and reference points and interfaces through which these functional blocks exchange information for the purpose of managing and orchestrating NFV.

The architecture 200 includes an OSS/BSS (operations support system and business support system) 201, and an NFV-MANO including an NFVO 202, an VNFM 203, a VIM 204, a CISM (container Infrastructure Service Management) 205 and a CCM (CIS Cluster Management) 217.

The NFVO 202 manages a network service (NS) 206 which, in this example, includes the following virtualized functions: an AMF 208, an SMF 209 and a PCF 210 and a RAN component 207. A network service (NS) is a composition of physical and virtual network function(s) and/or service(s), defined by its functional and behavioural specification.

The architecture 200 further includes an NFVI (Network Function Virtualization Infrastructure) 211 which includes hardware and software components that build up the virtualized environment in which VNFs are deployed.

In this example, the AMF 208, the SMF 209 and the PCF 210 are implemented as VNFs, i.e. as NFs that can be deployed on the NFVI 211. The SMF 209 is implemented by a container 212 running in a virtual machine, the PCF 210 on a virtual machine 213 and the AMF 208 in a container 214, all running on a COTS server 215. The RAN component 207 is, in contrast, implemented on an ATCA device 216, i.e. is a physical network function.

The NFVO 202 manages the NS lifecycle and coordinates the overall resource usage of NS, VNF lifecycle is supported by the VNFM 203 and NFVI resources management supported by the VIM 204, CISM 205 and CCM 217 to ensure an optimized allocation of the necessary resources and connectivity.

The VNFM 203 is responsible for the lifecycle management of VNFs independently on whether the VNF is deployed over VM or containers.

The VIM 204 is responsible for controlling and managing the NFVI compute, storage and network resources, typically within one operator's infrastructure domain. The CISM 205 is responsible for orchestrating and managing the container infrastructure services and the containerized workloads instantiated on them. The CCM 217 is responsible for the management of container clusters.

It should be noted that regarding network functionality, 3GPP is responsible for the management and configuration of the Network Functions (NFs) and interactions between NFs while it is not responsible for the management of the virtual network function aspects. In fact, the 3GPP functionality remains the same from an application perspective irrespective of whether a network function is virtualized or not. From ETSI NFV perspective, the NFV-MANO handles the orchestration and management of the both virtualized resources and the deployed VNF while remaining agnostic to the actual VNF application (e.g., if the VNF application is a virtualized PCF or a virtualized SMF).

Regarding VNF management, not only VNF instantiation but also other life cycle management (LCM) operations such as, update, scaling etc. are made by NFV-MANO (NFVO/VNFM/CISM/VIM) and the VNF configuration can be made by an element manager through interaction with the OSS.

A VNF can be part of multiple network services and a network service can be shared between multiple network slices (or network slice subnets) according to 3GPP and NFV-MANO. Further, even without considering 3GPP network slicing, multi-tenancy is possible in NFV, i.e. an NFV environment can be shared between multiple tenants (in the sense of multi-tenancy) and a service provider can offer NFV to multiple tenants. Tenants include but are not limited to network slices, network services, etc.. Multiple users consume services from the same NFV-MANO or dedicated NFV-MANOs. Different sharing scenarios can be realized even without referring to the network slicing mechanism defined by 3GPP and correlation between the shared resources with specific network slice descriptors (NSDs) or identifiers (e.g., NSI-IDs).

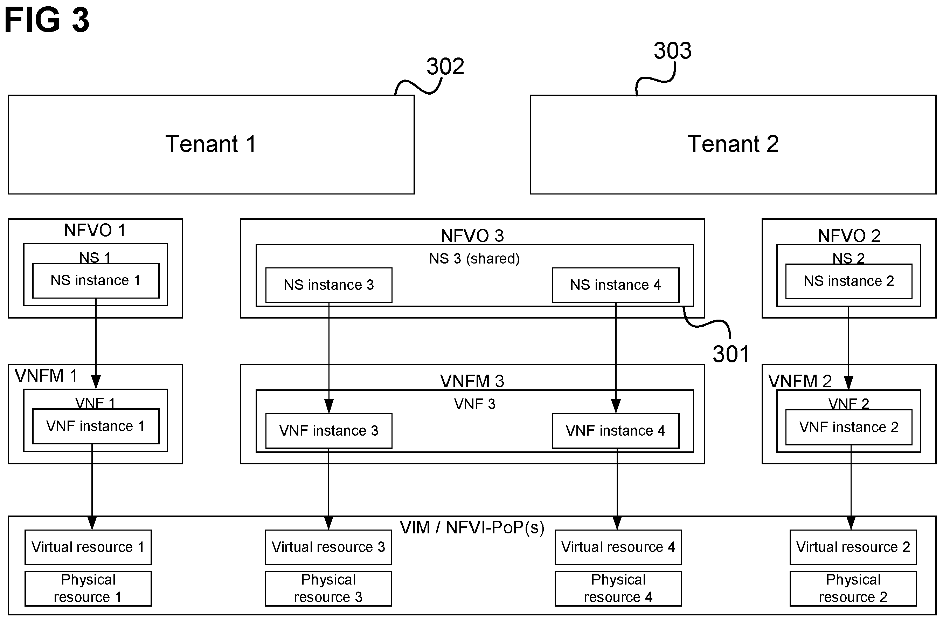

Figure 3 illustrates a sharing scenario where, in particular, a Network Service 301 is shared between two tenants 302, 303. The different VNFs which are parts of the shared Network Service are also shared between the different tenants 302, 303.

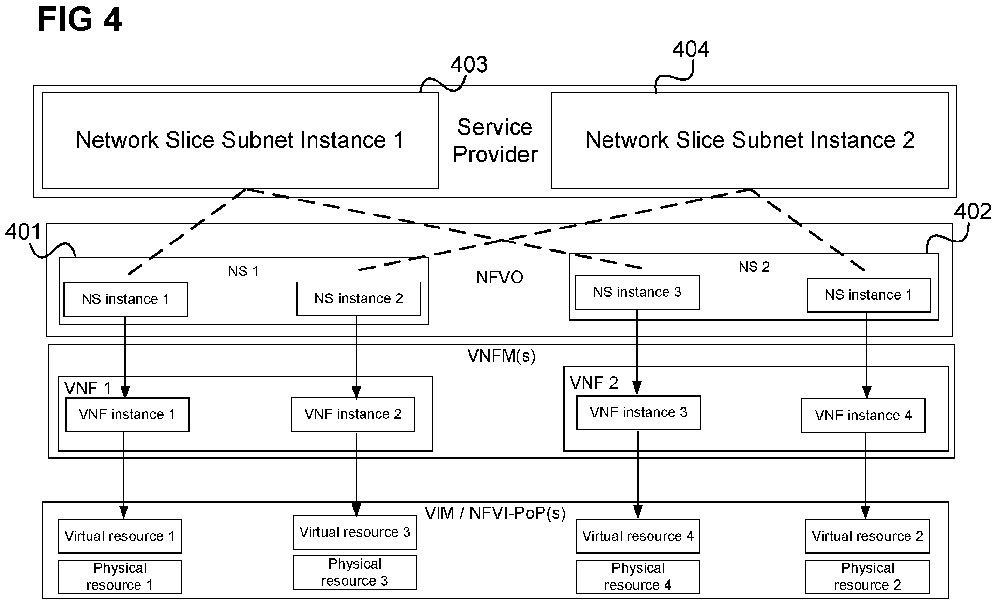

Figure 4 illustrates a sharing scenario where two network services 401, 402 are shared between two network slices subnet instances 403, 404.

Regarding the touch points between 3GPP's network slicing management model and the ETSI NFV management model one or more network slice subnet instances are mapped to one or more shared network services.

There are various options regarding the deployment of network slices using NFV Network Services (NSs):
- Multiple NS as deployment unit for one network slice instance with NFV provided connectivity.
- Multiple NS as deployment unit for one network slice instance without NFV provided connectivity for inter network slice subnet
- A single NS as deployment unit for one network slice instance
- Management of network slice instance transport network connectivity with multi-site connectivity services.

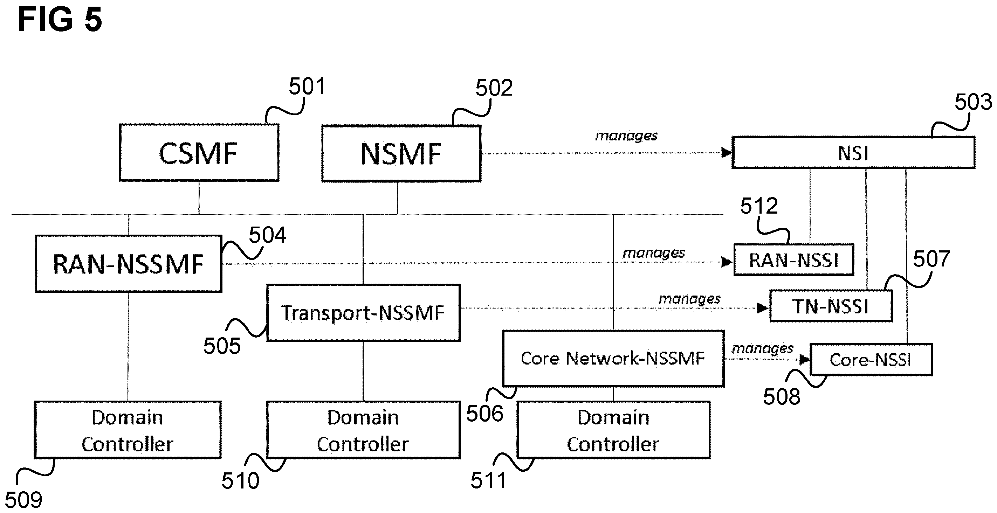

Figure 5 illustrates network slicing in 3GPP from a management perspective.

A Communication Service Management Function (CSMF) 501 is responsible for translating the communication service requirements to network slice requirements.

A Slice Management Function (NSMF) 502 serves for the end-to-end management and orchestration of an NSI (network slice instance) 503, i.e. a realization of a network slice.

Network Slice Subnet Management Functions (NSSMFs) 504, 505, 506 are responsible for the management and orchestration of the sub-network slice instance 503 in a specific domain, i.e. of network slice subnet-instances (NSSIs). For example, a Transport Network Slice Subnet Instance (TN-NSSI) 507 is a realization of the network slice on transport domain and a Core-NSSI 508 is realization of the network slice on the core domain. An NSI 503 is a composition of multiple NSSIs 507, 508, 512.

The NSSMFs 504, 505, 506 are connected to respective domain controllers 509, 510, 511 which are responsible for the relevant control and management plane operations within the respective domain.

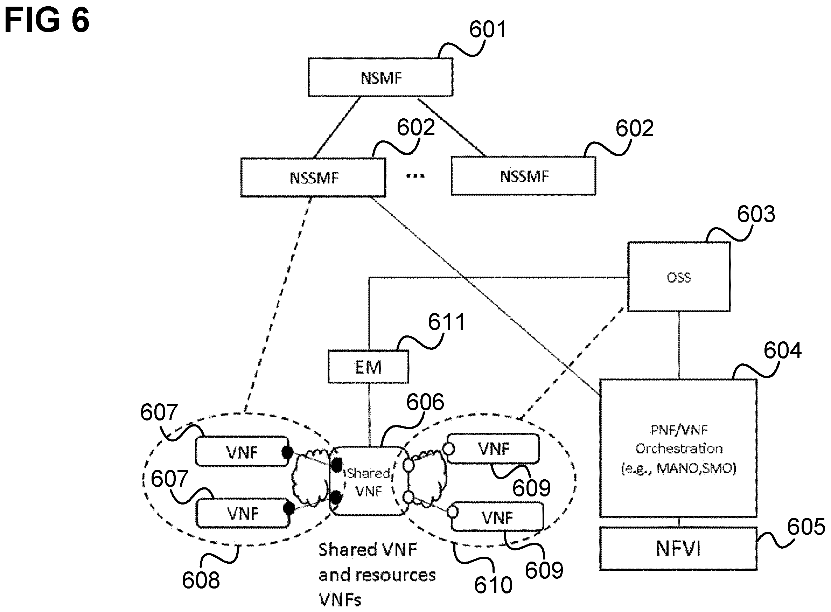

Figure 6 illustrates slice management from a MANO perspective.

As described with reference to figure 5, there is an NSMF 601 and multiple NSSMFs 602. Further, as described above, there is an OSS 603 and an orchestration system managing VNFs and NFVI 605.

In the example of figure 6, the OSS 603 can configure application aspects of a shared VNF 606 via an element manager (EM) 611 following normal procedures. VNFs 607 belonging to a first communication network 608 (e.g. a first tenant) and VNFs 609 belonging to a second communication network 610 are also connected to the shared VNF 606.

The orchestration system (also referred to orchestrator) 604 controls the deployment and management of the Virtualized Network Functions (VNF) as well as Physical Network Functions (PNF).

According to various embodiments, the communication system in particular includes Programmable Metasurfaces (PMS). The term PMS may be understood to include any kind of metasurface variations and technologies such as Smart Mirror, Spatial Microwave Modulator (SMM) Reconfigurable intelligent Surfaces (RIS) or (RSI) and Large Intelligent surface (LIS).

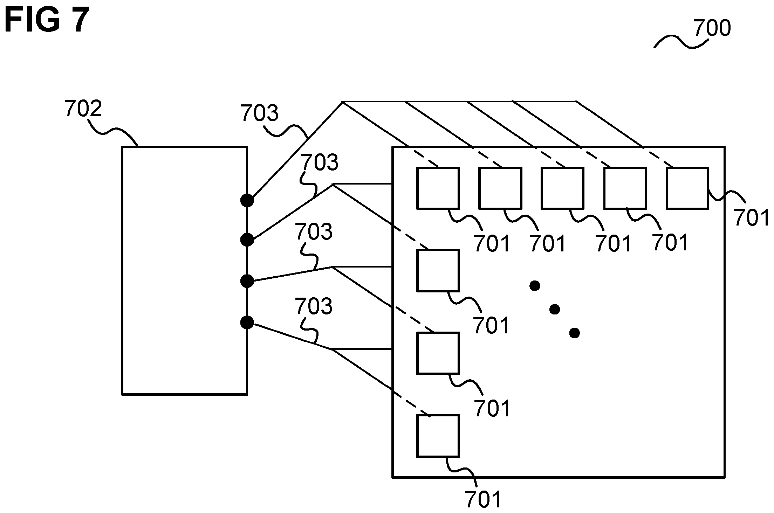

Figure 7 shows a programmable metasurface (PMS) 700.

The (PMS) 700 includes an arrangement (e.g. matrix) of switchable elements (denoted as "meta-atoms") 701 which provides the ability to manipulate radio signals like steering radio beams in a specific direction or completely absorb radio waves.

The arrangement of meta-atoms 701 (or "tile") forms the actual (physical) metasurface which can be mounted on an indoor and/or outdoor wall. The PMS 700 further includes a PMS controller function 702, i.e. a controller (e.g. implementing an IoT (Internet of Things) Gateway) which implements, via connections 703, the control layer of the PMS 700, for example provides a tile central power supply, inter-tile communication, enables tile-to-external- world communication (in particular to a PMS manager) and optionally environmental sensing duties. The PMS controller function 702 is for example a dedicated programmable hardware device (e.g. arranged next to or tightly coupled with the metasurface).

A metasurface allows providing a type of communication system node leveraging smart radio surfaces with thousands of small antennas or meta material elements (i.e. the meta-atoms 701) to dynamically shape and control radio signals in a goal-oriented manner. Metasurfaces may be used to optimize bandwidth usage, optimize the signal received in a receiver through exploitation of scattering and multipath phenomena by a corresponding control of the metasurface. A desired and supported electromagnetic function of the metasurface is attained by a corresponding switch state configuration setup for the meta-atoms. This gives the ability to steer beams in a specific direction or completely absorb an incoming radio signal. In particular, metasurfaces allow mitigating undesired path loss effects in real-world wireless communications and optimize MIMO (multiple input multiple output) capacity by grooming wave propagation to achieve constructive superposition at the user devices, optimizing their power-delay profile (PDP) and avoiding the negative effects of multi-path fading.

Like the sharing of VNFs and network services between tenants (see figure 3) and network slices or network slice subnets (like in figure 4) a sharing of metasurfaces between tenants or network slices or network slice subnets (which, when the subnets belong to different slices, results again in the sharing between slices) can increase the efficiency of the usage of this specific resource, i.e. the metasurface.

According to various embodiments, to allow such a sharing in an efficient manner, so-called virtual walls (i.e. metasurface abstractions) are created by a component, in the following examples denoted as PMS hypervisor (PMS-H) and an approach for managing network slice instances to operate on top of shareable programmable metasurfaces (PMS) is provided.

It should be noted that a network slice instance is a realization of network slice. For example, a generic description of a network slice can be provided (e.g. two routers operating with VLAN (virtual local area network) connectivity between them). Then a domain controller may take this description and create the right configuration for the routers, perform resource allocation etc. Then this realization of the network slice, which is called "network slice instance", can be managed. This is similar to the relation of VNF vs. VNF instance. The VNF can be seen as the abstract definition and description of what the VNF is while a VNF instance is a specific instantiation (i.e. instance) of such a type of VNF.

The PMS-H creates and manages programmable metasurface abstractions, denoted in the following examples as (programmable) virtual walls (vPMSs, i.e. virtual programmable metasurfaces, in other words virtual metasurface resource elements). The vPMS are also programmable by a management system on a per tenant or per slice basis. The PMS-H thus introduces functionality to enable multitenancy and slicing on top of physical PMSs resources, including, for example, interfaces between the PMS-H and or more network slice management systems or orchestration systems. The PMS-H is for example responsible for vPMS Lifecycle management (LCM), also handles resource and service isolation, can support additional functionality like migration of the vPMS to another PMS and can interact with one or more other PMS-Hs to support multi-technology operations (e.g., migration). Further, functionality inside a respective telecom operator slicing management system may be provided to manage and optimize the deployment and operation of network slices instances (NSs) considering a shared PMS operational environment.

A network function may operate on top of a vPMS (and in particular configure the vPMS accordingly), i.e. use the vPMS to perform a communication function. Such a network function is denoted as vPMS-NF and may be a PNF or a VNF.

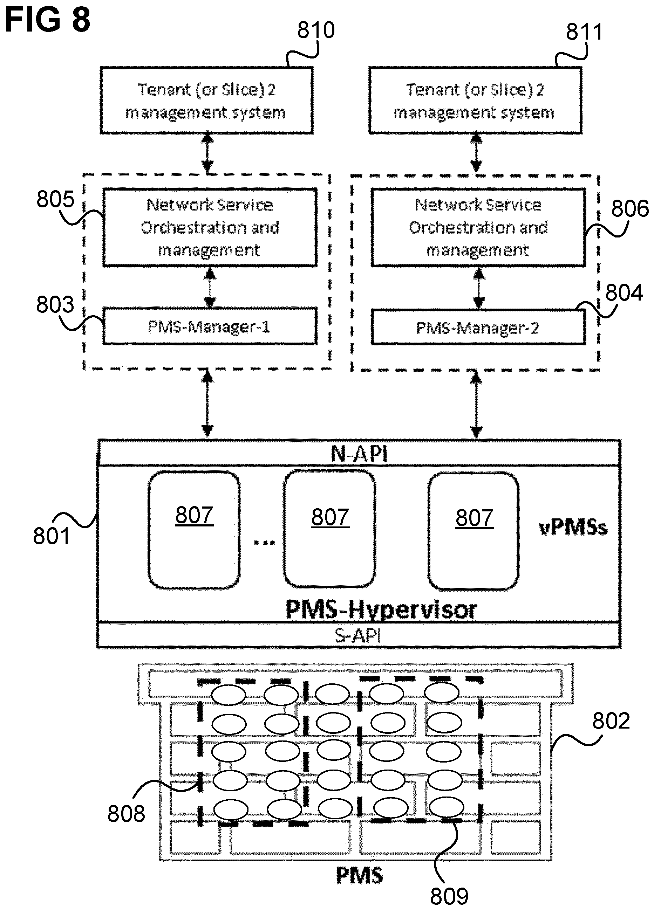

Figure 8 illustrates an architecture including a PMS-Hypervisor (PMS-H) 801.

The PMS-H 801 is connected to a programmable metasurface 802 (in the "southbound" and two PMS-managers 803, 804 (in the "northbound"). Each PMS manager 803, 804 is in turn connected to a respective network service management or orchestration system 805, 806 for a respective tenant or NSSMF/NSMF 810, 811.

The PMS-H 801 creates multiple virtual walls (vPMSs) 807 wherein each virtual wall is associated with communication resources provided by the PMS 802. In this example, a first one of the virtual walls is for example associated with a first subset 808 of the meta-atoms of the PMS 802 and a second one of the virtual walls is for example associated with a second subset 809 of the meta-atoms. A communication function (including typically data transmission operations etc.) which is provided by a virtual wall (according to a request from a management or orchestration system 805, 806) is provided by the communication resources associated with the virtual wall. These can be, as illustrated in the present example, subsets of meta-atoms of the PMS 802 but may also be time-slots or frequency bands provided by the PMS 802 (i.e. multiple virtual walls may also be provided by the PMS in a time multiplexing or frequency multiplexing, phase manipulation manner).

The PMS-H 801 may be seen to resemble an OS hypervisor in the sense of providing a resource sharing mechanism by implementing virtual entities on top of a physical entity. Specifically, the PMS-H 801 creates virtual programmable walls (vPMSs) which can be assigned to a tenant or NSSIs (i.e. a resource consumer). It enables PMS resource sharing and guarantees isolation and it is responsible to guarantee isolation between different vPMS on the physical layer.

The PMS-H 801 can be incorporated into a PMS-Manager function or can be an independent entity exposing services to multiple managers dedicated to different tenants. It may keep the state of allocated resources per NSSI or tenant (supporting the appropriate identification mechanism). The PMS-H 801 manages all PMS resources and monitor PMS operations. The PMS-H approach can be applied in sharing scenarios even when considering multitenancy without necessarily 3GPP slicing.

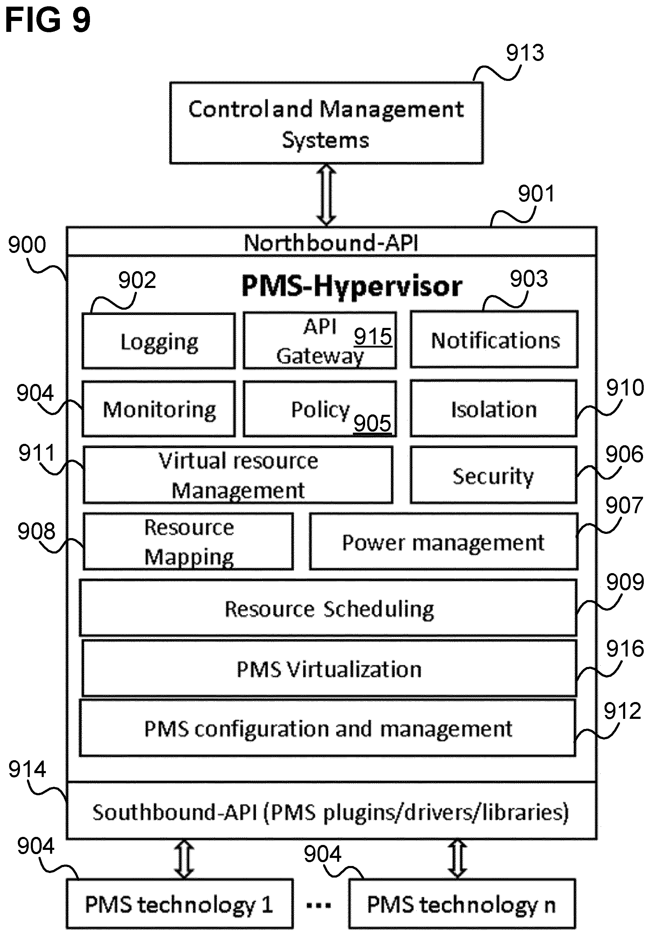

Figure 9 shows a PMS Hypervisor (PMS-H) 900 in more detail.

The PMS-H 900 includes a northbound interface 901 connected to control and management systems 913 (such as the PMS managers 803, 804, the orchestration and management systems 805, 806 and the management systems of the tenants or NSSIs).

Further, the PMS-H 900 includes a southbound interface 914 connected to one or more PMSs 904 (possibly of different technologies), e.g. PMS 802.

The (functional) core of the PMS-Hypervisor 900 includes
- a PMS Virtualization layer 916
   ∘ creates and manages the vPMS, i.e. creates and manages abstract representations of PMS resources.
   ∘ Virtual walls (vPMSs) can be associated with PMS resources (i.e. communication resources provided by one or more PMSs) of one or multiple types (e.g. separation of resources (i.e. multiplexing) may be done in space and time, or in space and frequency domain etc.)
- a PMS and vPMS logger 902 for logging information
- a PMS and vPMS notifier 903 for notification
- a PMS and vPMS monitoring function 904 which correlates data and statistics received from a PMS 904 with one or more vPMSs (for example performance metrics, faults etc).
- a PMS and vPMS policy management function 905 which hosts a policy function used, e.g., to interpret slice specific vPMS policies.
- PMS and vPMS security functions 906
- a PMS power management optimization function 907
- a resource mapping function 908 for resource mapping from PMSs to vPMSs. A vPMS may be mapped to more than one PMSs (possibly of different technologies)
- a resource scheduling function 909 (to support vPMS multiplexing) which introduces a control mechanism about the resource sharing mechanism used (e.g., Round Robin, DRR (Deficit Round Robin), WRR (Weighted Round Robin), WFQ (Weighted Fair Queuing), static, etc.)
- a vPMS isolation function 910 which guarantees that there are no conflicts due to multiplexing and preserves isolation between vPMSs on multiple different domains.
- a vPMS (lifecycle) management function 911 (create, delete, scale, migrate vPMSs etc.)
- a PMS configuration and management function 912
- additional functionality like virtual wall snapshotting, high availability, auto-healing, etc.

The northbound interface 901 (e.g. API (Application Programming Interface) for which the PMS-H 900 includes a corresponding API gateway 915)
- exposes functionality related to vPMS management
- exposes inventory services of the physical and virtual PMS resources in the northbound
- conforms for example to SDK (software development kit) or REST (representational state transfer) etc.
- handles slice service requests for vPMS creation/deletion/migration etc.
- exposes PMS capabilities exposure and capacity management
- translates configuration commands received from a PMS technology-agnostic northbound interface (N-API) to actual configuration applied to the PMS
- translates high-level requirements received by the PMS N-API to actual or recommended Virtual wall representations.
- N-API used by dedicated PMS management systems (e.g., acting as domain controllers for NSSMF)
- exposes filtered performance and/or fault management data on per slice virtual wall basis

Examples for information communicated via the northbound interface are
▪ vPMS capabilities for vPMS capacity management (similar for PMS)
▪ vPMS tenant info (similar for PMS)
   ▪ id
   ▪ owner-name
   ▪ owner-description
▪ vPMS tenant policy (applies to all vPMSs for this tenant/slice)
▪ vPMS-info [List]
   ▪ vPMS-id
   ▪ vPMS-location
   ▪ vPMS policy
      ▪ vPMS-policy-id
      ▪ vPMS-policy-description
   ▪ vPMS monitoring info
   ▪ vPMS Virtual-wall-LCM (create, start, stop, update/scale, release etc.)
   ▪ vPMS-requirements (used to instantiate the vPMS)
      ▪ technology-domain
      ▪ realization-requirements (e.g. time domain, space, frequency, phase etc.)
      ▪ reservation-duration
      ▪ start of reservation
      ▪ security-authorization
      ▪ functionality (e.g., steer, absorb, polarize, phase alter, polarization alter, sense)

These attributes are only examples and more extended functionalities (extensions) may be included. PMS-H also exposes similar information for the PMS (owner, resources etc.)

The southbound interface 902 (e.g. API)
• performs actual PMS configuration and management
• collects and/or analyzes performance and/or fault management data from the one or more PMSs 904
• depends on the PMS technology (is for example in the form of driver etc).

By means of the virtual walls, a PMS 904 may then be shared among network services (and thus, if they belong to different tenants and/or slices, by tenants and/or slices).

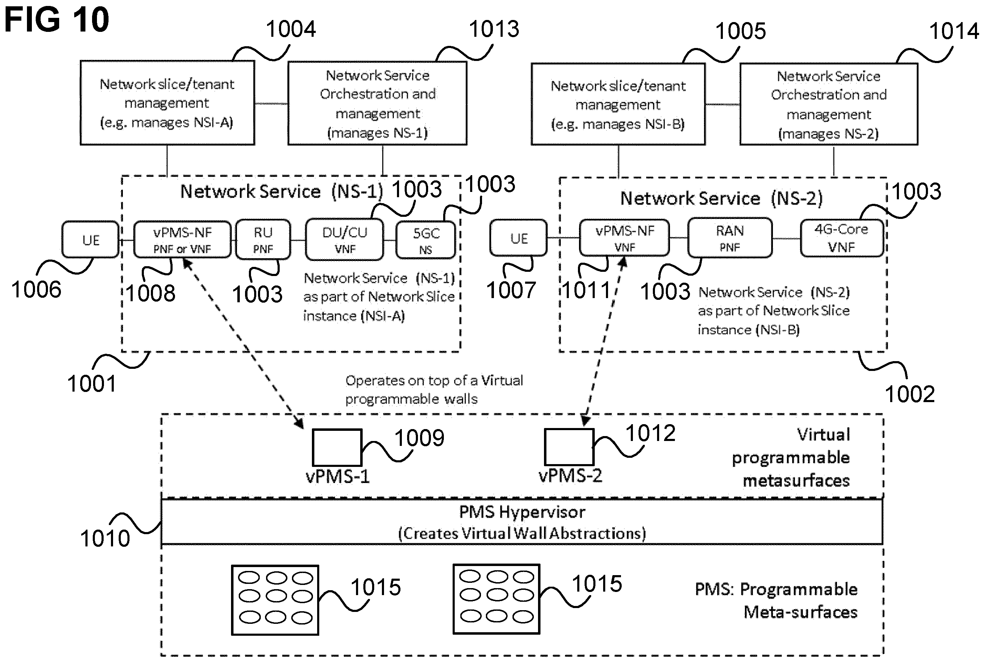

Figure 10 illustrates the shared use of one or more PMSs 1015 by two network slices or tenants 1004, 1005, each providing a respective network service 1001, 1002 to a respective UE 1006, 1007. Each network service 1001, 1002 is managed by a respective network service orchestration and management system 1013, 1014.

Similarly to figure 2, the first network service 1001 and the second network service 1002 are each provided by various respective components 1003 including one or more distributed components and centralized components, radio units and core network components like RAN components, an AMF an SMF and a PCF which may be provided by physical and/or virtual network functions.

Further, the first network service 1001 hosts a first vPMS-NF 1008 operating on top of a first vPMS 1009 created by a PMS hypervisor 1010 from the PMS 1015 (i.e. by allocation of communication resources of the PMS 1015 for it) and the second network service 1002 hosts a second vPMS-NF 1011 operating on top of a second vPMS 1012 created by the PMS hypervisor 1010 from the PMS 1015 (i.e. by allocation of communication resources of the PMS 1015 for it).

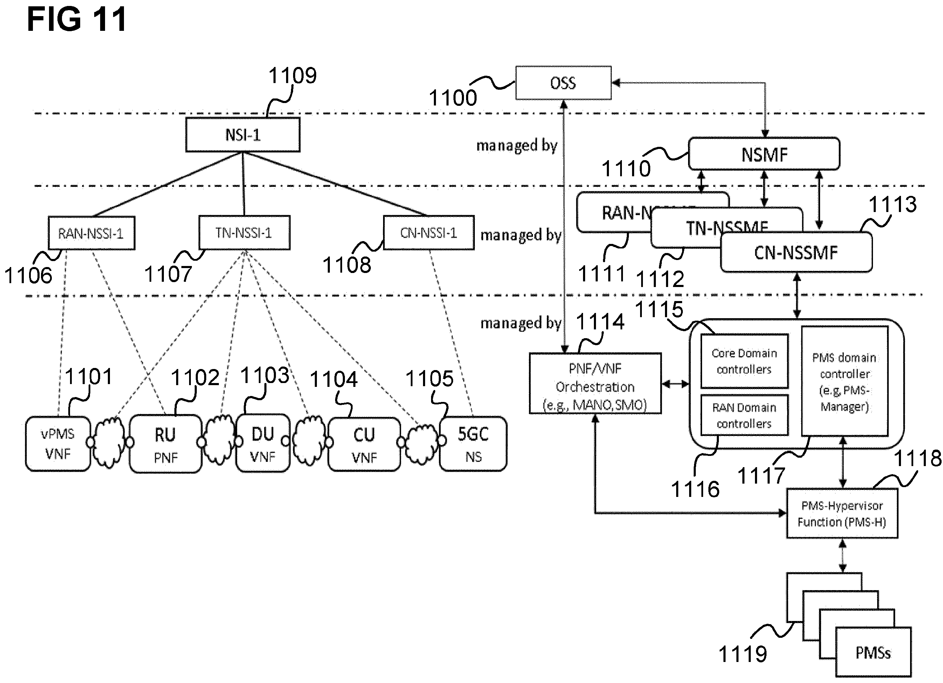

Figure 11 illustrates PMS slice management.

As in Figure 10, components 1101 to 1105 including a vPMS 1101 provide a network service. The vPMS 1101 and the RU 1102 belong to a RAN-NSSI 1106 (i.e. RAN domain NSSI). The core network component 1105 belongs to a CN-NSSI 1108 (i.e. core network domain NSSI). Connections between the components 1101 to 1105 belong to a TN-NSSI 1107 (i.e. transport domain NSSI). The NSSIs 1106, 1107, 1108 are part of NSI 1109.

As in figure 5, the NSI 1109 is managed by an NSMF 1110 and the NSSIs are managed by corresponding NSSMFs 1111, 1112, 1113.

The components 1101 to 1105 are managed by a PNF/VNF orchestration system. It is in communication with core domain controllers 1115, RAN domain controllers 1116 and a PMS domain controller, e.g. a PMS manager 1117 which, as described above, communicates with a PMS-H 1118 creating vPMSs from one or more PMSs 1119. An OSS controls the PNF/VNF orchestration 1114 and interacts with NSMF 1110.

From NFV-MANO point of view, there is no entity which is managing the mapping of VNF/PNFs and physical resources to NSSIs. NFV-MANO is slice unaware and only NFV Network Service aware. A PMS manager can be slice aware or slice unaware. It depends on which management level the mapping is preserved. PMS-H is slice-unaware but the vPMS can be part of one or more network services which are part of one o more NSIs. Under network slicing, an NSSI can have multiple associated vPMSs. Each vPMS may be built using a different physical layer characteristic. Sharing of vPMSs (virtual walls) is also possible between different NSSIs.

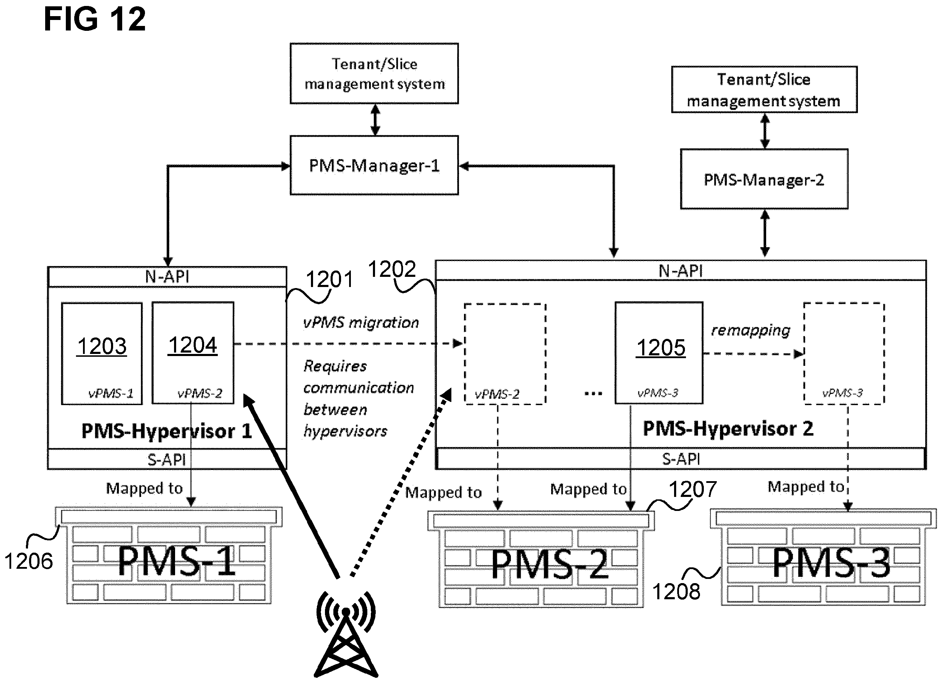

Figure 12 illustrates vPMS migration operations.

In the example of figure 12, a first PMS-H 1201 has created a first vPMS 1203 and a second vPMS 1204 from a first PMS 1206 and a second PMS-H 1202 has created a third vPMS 1205 from a second PMS 1207.

The PMS-Hs 1201, 1202 may provide the functionality of vPMS migration. This means that a vPMS is moved to another PMS (operating over the same or other PMS technology) while keeping the vPMS state and functionality unaffected. In the present example, the second vPMS 1204 is first provided by the first PMS 1206 (i.e. by allocating communication resources provided by the first PMS 1206 to it) and then provided by the second PMS 1207 (i.e. by allocating communication resources provided by the second PMS 1207 to it). The PMS-Hs 1201, 1202 communicate accordingly for enabling this functionality either directly or coordinated by some other management system.

In general, the migration may mean that for a virtual programmable metasurface the amount of communication resources provided by one of the programmable metasurfaces associated with the virtual programmable metasurfaces is decreased and the amount of communication resources provided by another one of the programmable metasurfaces associated with the virtual programmable metasurfaces is increased.

Further, each PMS-H 1201, 1202 may provide the functionality of vPMS resource remapping. This means that it creates (instantiates) a vPMS and maps it to one or more PMSs (i.e. allocates communication resources provided by the one or more PMSs to it) and then updates the mapping of vPMS to PMSs by remapping to one or more different PMS(s).

In the present example, the third vPMS 1205 is initially mapped to the second PMS 1207 and then remapped to a third PMS 1208 by the second PMS-H 1202. In general, the association of communication resources with a virtual programmable metasurface is changed.

The remapping and migration operations may for example be carried out to be able to fulfil an incoming request for creation of a management system. For example, a requested virtual programmable metasurface may have requirements for which certain communication resources (e.g. supporting a certain frequency ranged) are needed which are not needed for a virtual programmable metasurface that has already been created and for which therefore a migration and/or remapping is performed to free up suitable communication resources which may then be used for the requested virtual programmable metasurface.

It should be noted that a vPMS may be associated with communication resources from multiple PMSs (i.e. can be mapped to multiple PMSs by a PMS-H), i.e. a vPMS is not necessarily associated with communication from a single PMS (i.e. mapped to a single PMS by a PMS-H).

Furthermore, based on events (a call to the PMS-H northbound interface) a vPMS can be scaled out/up scaled in/down, i.e. the amount of communication resources provided by one or more PMSs which is allocated to it may be increased or reduced by the PMS-H managing it (i.e. the number of meta-atoms allocated to it may be increased or reduced). Depending on the PMS technology scaling can be realized using different means (e.g., allocate more atoms, allocate more frequencies, time etc.).

In the case of vPMS migration and/or resource remapping communication between PMS-H and the radio part of the mobile network controllers is also possible to jointly optimize the overall communication (e.g., tune dynamically beamforming parameters on the transmitting antennas of the mobile network based on the vPMS migration).

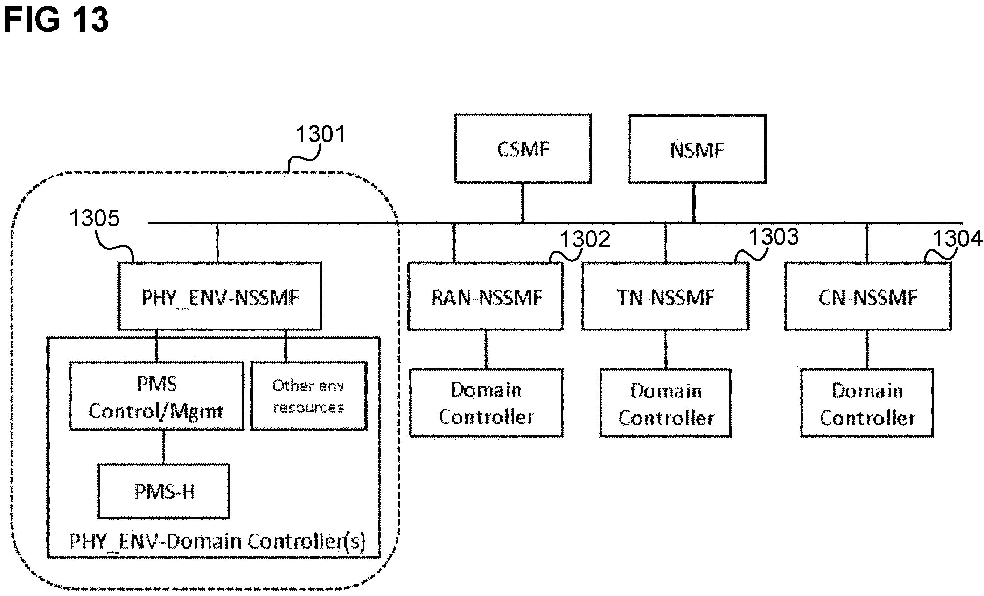

Figure 13 illustrates the addition of the PMS virtualization functionality as described above by means of an additional management domain (i.e. subnet management function) in addition to RAN domain, transport domain and Core domain as described with reference to figure 5: RAN NSSMF 1302 is responsible for slicing management when considering RAN elements (VNFs, PNFs, Antennas, etc.). TN-NSSMF 1303 is responsible for slicing management when considering Transport Network RAN elements. CN-NSSMF 1304 is responsible for slicing management when considering Core Network (CN) elements (VNFS, PNFs).

The additional domain 1301 is used to manage physical environment related NSSI instances, such as when programmable metasurfaces are part of such physical environment. Specifically, a corresponding PHY_ENV-NSSMF 1305 is responsible to manage the LCM of the PHY_ENV NSSI related aspects. PHY_ENV-NSSMF 1305 is able to manage subnets composed of any type of environment related resources, including programmable metasurfaces, and can be used to support a number of additional use cases (e.g., sensing). Using PHY_ENV-NSSMF different environment resources can be used to support multiple NSSIs (e.g., one NSSI is optimized for sensing, one NSSI is optimized for beamforming optimization, etc.). Non-Public networks as well as multi-technology environments (e.g. including Wi-Fi) may also be considered.

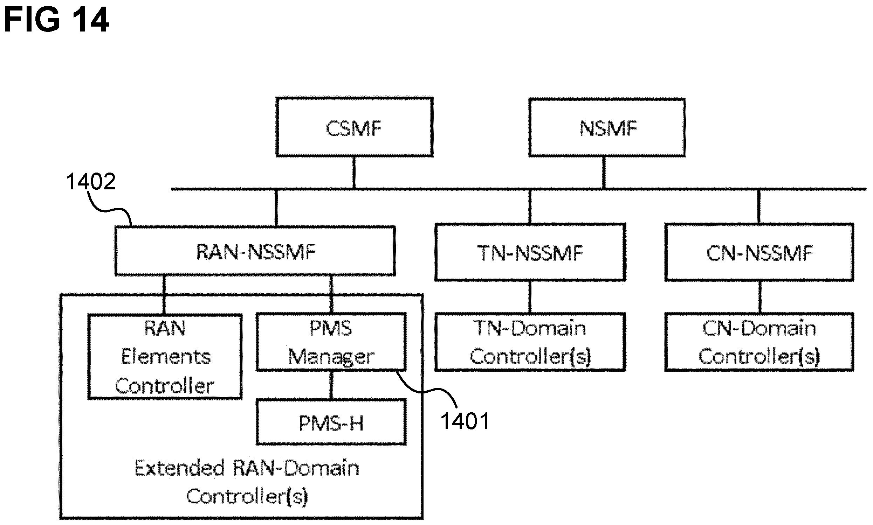

Figure 14 illustrates an alternative approach where subnet management of physical environment is part of the RAN-NSSMF 1402. This means that the PHY-NSSMF functionality is incorporated into the RAN-NSSMF by broadening the scope of the latter (e.g., to consider PMS type of resources).

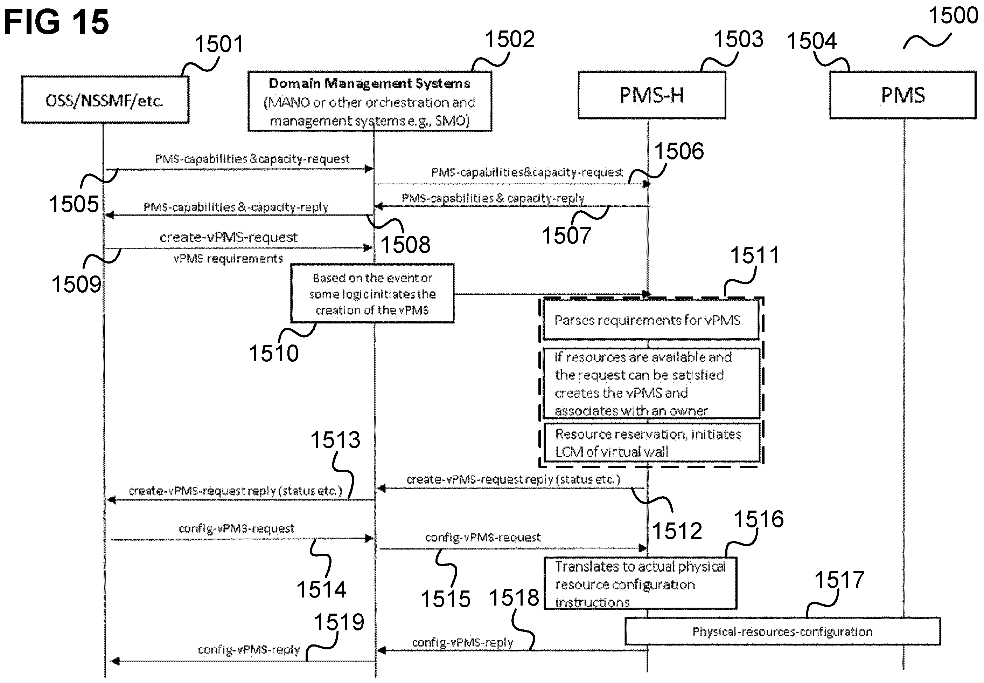

Figure 15 shows a flow diagram 1500 for creation of a vPMS for a network slice.

An upper level orchestration system 1501 (e.g. OSS 1120 or RAN-NSSMF 1111 etc.), a domain management system 1502 (e.g. corresponding to the PNF/VNF orchestration 1114 or a PMS controller etc.), a PMS-H 1503 (e.g. corresponding to the PMS-H 1118) and a PMS 1504 (e.g. corresponding to a PMS 1119) are involved in the flow.

In 1505, the orchestration system 1501 sends a PMS capabilities & capacity request to the domain management system 1502 which the domain management system 1502 forwards to the PMS-H 1503 in 1506.

In 1507, the PMS-H 1503 sends a corresponding reply to the domain management system 1502 which the domain management system 1502 forwards to the orchestration system 1501 in 1508.

In 1509, the orchestration system 1501 sends a request for creation of a vPMS to the domain management system 1502. The request may include vPMS requirements. In 1510, the domain management system 1502 initiates creation of a vPMS in reaction to the request and instructs the PMS-H 1503 accordingly.

In 1511, the PMS-H 1503 parses the requirements for the vPMS. If resources are available and the request can be satisfied it creates a vPMS and associates it with an owner (e.g. the network slice in this example). Further, it reserves communication resources of the PMS 1504 for it and initiates LCM (Lifecycle management) of the vPMS.

In 1512, the PMS-H 1503 sends a reply to the creation request to the domain management system 1502 which the domain management system 1502 forwards to the upper level orchestration system 1501 in 1513.

In 1514, the orchestration system 1501 sends a vPMS configuration request to the domain management system 1502 which the domain management system 1502 forwards to the PMS-H 1503 in 1515.

In 1516, the PMS-H 1503 translates the configuration request to actual physical resource configuration instructions and performs corresponding configuration of the PMS 1504 in 1517.

In 1518, the PMS-H 1503 sends a reply to the configuration request to the domain management system 1502 which the domain management system 1502 forwards to the upper level orchestration system 1501 in 1519.

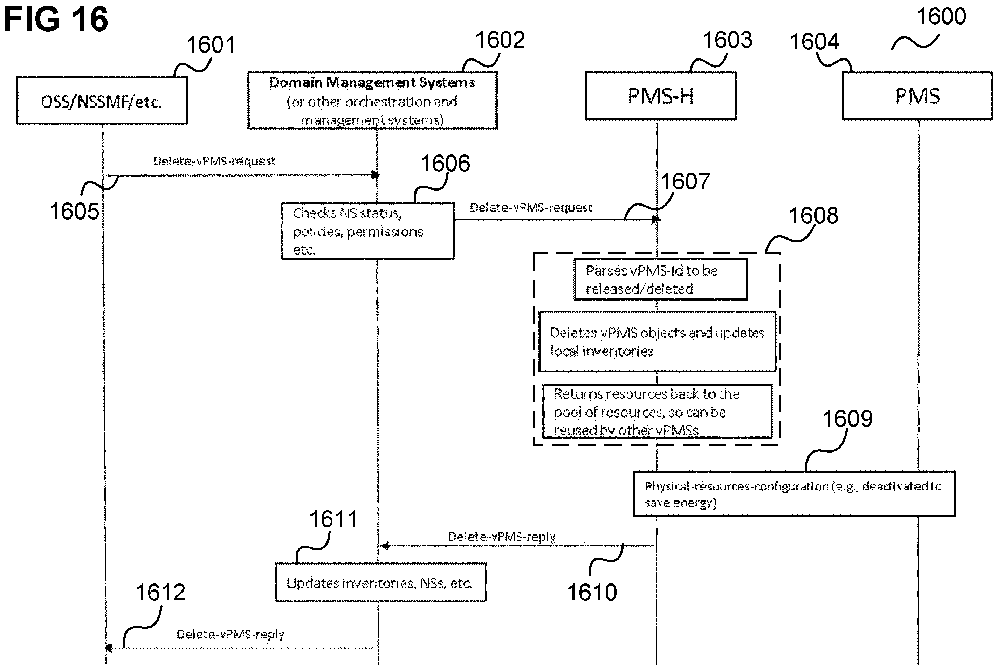

Figure 16 shows a flow diagram 1600 for release of a vPMS.

As in figure 15, an upper level orchestration system 1601, a domain management system 1602, a PMS-H 1603 and a PMS 1604 are involved in the flow.

In 1605, the upper level orchestration system 1601 sends a request to delete a vPMS to the domain management system 1602. In 1606, the domain management system 1602 decides whether to release the vPMS and, in this example, requests the PMS-H 1603 to release the vPMS in 1607.

In 1608, the PMS-H 1603, parses the request for the vPMS-id to be released (i.e. deleted), deletes vPMS objects and updates local inventories according to the release and returns communication resources (allocated to the released vPMS) back to the available pool of communication resources so can they can be reused for (allocated to) other vPMSs.

In 1609, the PMS-H 1609 performs physical resource configuration of the PMS 1604, e.g. deactivates meta-atoms formerly allocated and configured to the released vPMS, e.g., to save energy.

In 1610, the PMS-H 1603 sends a reply to the release request to the domain management system 1602.

In 1611, the domain management system 1602 updates inventories for one or more NSs etc. accordingly.

In 1612, the domain management system 1602 forwards the reply to the upper level orchestration system 1601.

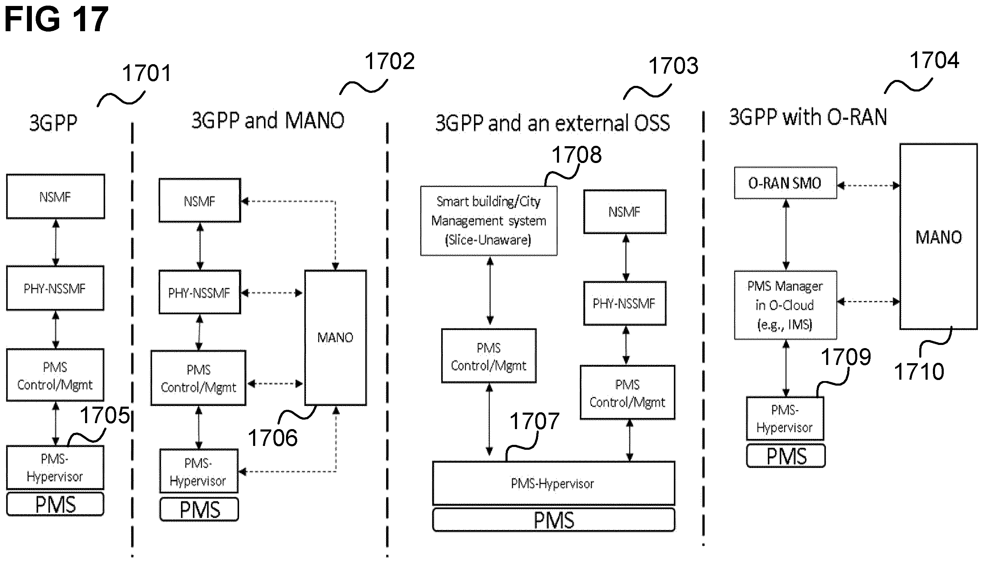

Figure 17 shows variants 1701 to 1704 of an architecture including a PMS-Hypervisor.

In the first variant 1701, the PMS-H 1705 communicates with the relevant 3GPP communication management systems (without MANO).

In the second variant 1702, a MANO 1706 is further involved.

In the third variant 1703, the PMS-H 1707 communicates with a 3GPP communication management system and, in addition an OSS 1708 external to the 3GPP communication system.

In the fourth variant 1704, the PMS-H 1709 communicates with O-RAN management systems with involvement of a MANO 1710.

In particular, usage of the approaches described herein are not restrictive to one orchestration framework like ETSI NFV-MANO but can be applied to other designs like in O-RAN based systems.

It should be noted that the PMS-H can be incorporated (as software) to existing PMS-managers or can be an independent entity exposing services to multiple managers.

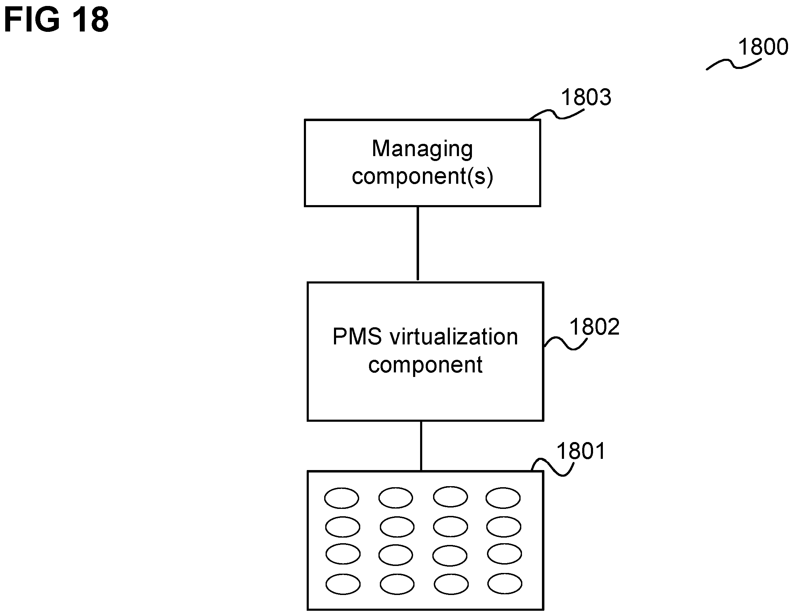

**In** summary, according to various embodiments, a communication system is provided as illustrated in figure 18.

Figure 18 shows a communication system 1800 according to an embodiment.

The communication system 1800 includes a programmable metasurface 1801 configured to provide communication resources and a metasurface virtualization component 1802.

The metasurface virtualization component 1802 is configured to create multiple virtual programmable metasurfaces, wherein each virtual programmable metasurface is associated with a respective portion of the communication resources provided by the programmable metasurface 1801.

Further, the metasurface virtualization component 1802 is configured to expose (in other words offers, provides information and/or makes available and/or accessible) the virtual programmable metasurfaces to one or more managing components 1803 as resource to provide one or more communication functions and, for each virtual programmable metasurface for which the one or more management components have requested provision of a respective communication function, control the programmable metasurface to provide the requested communication function by means of the portion of the communication resources provided by the programmable metasurface associated with the virtual programmable metasurface.

**In** other words, multiple virtual programmable metasurfaces (virtual walls) are provided by means of a (physical) programmable metasurface, i.e. a virtualization is performed wherein the communication resources provided by the programmable metasurface are distributed among multiple virtual programmable metasurfaces (virtual walls).

According to various embodiments, in other words, a programmable metasurface is virtualized into multiple virtual programmable metasurfaces. This allows efficient sharing of the programmable metasurface (considered as a programmable infrastructure element) among different network slices or tenants. In particular, it allows performing network slicing on top of metasurfaces when considering control and management plane from a telecom network orchestrator perspective. Functionality and interfaces may be provided to manage the lifecycle of advanced Network Services in the light of end-to-end network slicing.

The PMS virtualization (e.g. performed by a component denoted as PMS hypervisor function) may be performed in time, space (i.e. different parts of the tile, i.e. different subsets of meta-surface atoms are associated with different virtual walls), frequency (i.e. different frequency ranges are associated with different virtual walls and thus tenants/slices), phase etc. depending on the technology in effect. The PMS hypervisor (function) performs vPMS lifecycle management (i.e. creates, deletes, migrates, scales vPMSs etc). It may further support related vPMS operations (like fault and performance monitoring, security and auto-healing), PMS resource management and resource scheduling and PMS configuration and management. Further, functionality inside telecom operator network slice management systems may be provided to support life cycle management of NSSIs composed of VNF (or part of) hosted on virtual walls operating on top of shared PMSs (vPMS associate/de-associate with NSSI and network services).

The approach of figure 18 allows exposing PMS functionality as part of end-to-end telecom network service allocated to network slices.

For example, according to various embodiments, a method for optimizing deployment and operation of programmable metasurfaces is provided, including:
- receiving a request from a management system for:
   ∘ creating virtual programmable metasurfaces
   ∘ allocating the appropriate PMS resources on per virtual programmable metasurface
   ∘ Mapping virtual programmable metasurfaces to programmable metasurfaces.
   ∘ validating received input and conform against virtual programmable metasurfaces and programmable metasurfaces vPMS policies
   ∘ Configuring virtual programmable metasurfaces on physical PMS and configuring the appropriate PMS resources and
- receiving and exposing and translating information about:
   ∘ capabilities of virtual and physical programmable metasurfaces resources
   ∘ virtual and physical programmable metasurfaces status
   ∘ virtual and physical programmable metasurfaces capacity management and resource reservation and
   ∘ preserving isolation between virtual programmable metasurfaces

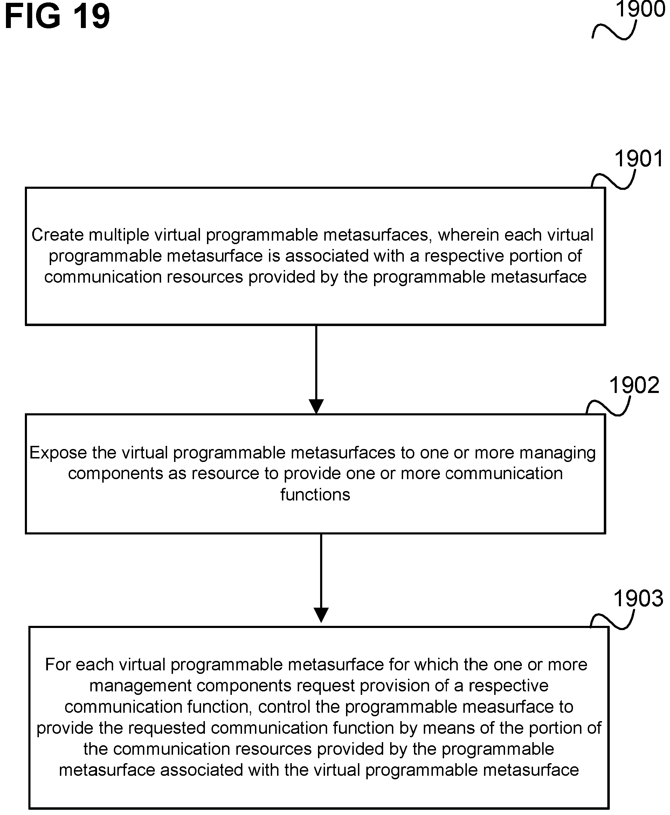

The communication system 1800 for example carries out a method as illustrated in figure 19.

Figure 19 shows a flow diagram 1900 illustrating a method for using a programmable metasurface in a communication system.

In 1901, multiple virtual programmable metasurfaces are created, wherein each virtual programmable metasurface is associated with a respective portion of communication resources provided by the programmable metasurface.

In 1902, the virtual programmable metasurfaces are exposed to one or more managing components as resource to provide one or more communication functions.

In 1903, for each virtual programmable metasurface for which the one or more management components request provision of a respective communication function, the programmable metasurface is controlled to provide the requested communication function by means of the portion of the communication resources provided by the programmable metasurface associated with the virtual programmable metasurface.

The components of the communication system 1800 (in particular the metasurface virtualization component) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

## Claims

1. A communication system (100, 1800) comprising:
a programmable metasurface (700, 802, 904, 1015, 1119, 1206, 1207, 1208, 1801) configured to provide communication resources; and
a processor configured to implement a metasurface virtualization component (1802) configured to
create multiple virtual programmable metasurfaces (807), wherein each virtual programmable metasurface is associated with a respective portion of the communication resources provided by the programmable metasurface (700, 802, 904, 1015, 1119, 1206, 1207, 1208, 1801);
expose the virtual programmable metasurfaces (807) to one or more managing components as resource to provide one or more communication functions; and
for each virtual programmable metasurface (807) for which the one or more management components have requested provision of a respective communication function, control the programmable metasurface (700, 802, 904, 1015, 1119, 1206, 1207, 1208, 1801) to provide the requested communication function by means of the portion of the communication resources provided by the programmable metasurface (700, 802, 904, 1015, 1119, 1206, 1207, 1208, 1801) associated with the virtual programmable metasurface (807),
**characterized in that**
the communication resources comprise time slots, frequency ranges and/or phases for communicating via the programmable metasurface (700, 802, 904, 1015, 1119, 1206, 1207, 1208, 1801) and wherein the metasurface virtualization component (1802) is configured to ensure that communication functions requested to be provided by different ones of the virtual programmable metasurfaces (807) are provided by different portions of the communication resources provided by the programmable metasurface (700, 802, 904, 1015, 1119, 1206, 1207, 1208, 1801) by time multiplexing, frequency multiplexing and/or phase multiplexing, respectively.

2. The communication system (100, 1800) of claim 1, wherein the communication resources for communicating via the programmable metasurface (700, 802, 904, 1015, 1119, 1206, 1207, 1208, 1801) comprise frequency ranges, time slots and/or subsets of resources like meta-atoms of the programmable metasurface (700, 802, 904, 1015, 1119, 1206, 1207, 1208, 1801).

3. The communication system (100, 1800) of claim 1 or 2, wherein the virtual programmable metasurfaces (807) are associated with different portions of the communication resources provided by the programmable metasurface (700, 802, 904, 1015, 1119, 1206, 1207, 1208, 1801).

4. The communication system (100, 1800) of any one of claims 1 to 3, wherein the metasurface virtualization component (1802) is configured to create at least one of the multiple virtual programmable metasurfaces (807) upon a respective request from the one or more managing components for creation of a multiple virtual programmable metasurface (807).

5. The communication system (100, 1800) of claim 4, wherein the metasurface virtualization component (1802) is configured to associate communication resources provided by the programmable metasurface (700, 802, 904, 1015, 1119, 1206, 1207, 1208, 1801) with the at least one of the multiple virtual programmable metasurfaces (807) to fulfil a requirement specified in the request.

6. The communication system (100, 1800) of any one of claims 1 to 5, wherein the metasurface virtualization component (1802) is configured to change, for at least one of the multiple virtual programmable metasurfaces (807), the association of communication resources provided by the programmable metasurface (700, 802, 904, 1015, 1119, 1206, 1207, 1208, 1801) with the at least one of the virtual programmable metasurfaces (807).

7. The communication system (100, 1800) of any one of claims 1 to 6, comprising multiple programmable metasurfaces (700, 802, 904, 1015, 1119, 1206, 1207, 1208, 1801), wherein the metasurface virtualization component (1802) is configured to create the virtual programmable metasurfaces (807) such that each virtual programmable metasurface is associated with a respective portion of the communication resources provided by the programmable metasurfaces (700, 802, 904, 1015, 1119, 1206, 1207, 1208, 1801), wherein at least one of the virtual programmable metasurface (807) is associated with communication resources provided by different ones of the programmable metasurfaces (700, 802, 904, 1015, 1119, 1206, 1207, 1208, 1801).

8. The communication system (100, 1800) of claim 7, wherein the metasurface virtualization component (1802) is configured to change, for at least one of the multiple virtual programmable metasurfaces (807), the association of communication resources provided by the programmable metasurfaces (700, 802, 904, 1015, 1119, 1206, 1207, 1208, 1801) with the at least one of the virtual programmable metasurfaces (807) such that the amount of communication resources provided by one of the programmable metasurfaces (700, 802, 904, 1015, 1119, 1206, 1207, 1208, 1801) associated with the at least one of the virtual programmable metasurfaces (807) is increased or decreased.

9. The communication system (100, 1800) of any one of claims 1 to 8, wherein the metasurface virtualization component (1802) is configured to expose capabilities of the programmable metasurfaces (700, 802, 904, 1015, 1119, 1206, 1207, 1208, 1801) and the virtual programmable metasurfaces (807) to the one or more managing components.

10. The communication system (100, 1800) of any one of claims 1 to 9, wherein the metasurface virtualization component (1802) is configured to allocate each virtual programmable metasurface (807) to a respective tenant managed by a respective one of the one or more managing systems.

11. The communication system (100, 1800) of any one of claims 1 to 10, wherein the communication system (100, 1800) comprises multiple network slices and at least some of the one or more managing systems are management systems for different network slices.

12. The communication system (100, 1800) of claim 11, wherein the metasurface virtualization component (1802) is configured to allocate the virtual programmable metasurfaces (807) to different network slices.

13. A method for using a programmable metasurface (700, 802, 904, 1015, 1119, 1206, 1207, 1208, 1801) in a communication system(100, 1800), comprising:
creating multiple virtual programmable metasurfaces (807), wherein each virtual programmable metasurface (807) is associated with a respective portion of communication resources provided by the programmable metasurface (700, 802, 904, 1015, 1119, 1206, 1207, 1208, 1801);
exposing the virtual programmable metasurfaces (807) to one or more managing components as resource to provide one or more communication functions;
for each virtual programmable metasurface (807) for which the one or more management components request provision of a respective communication function, controlling the programmable metasurface (700, 802, 904, 1015, 1119, 1206, 1207, 1208, 1801) to provide the requested communication function by means of the portion of the communication resources provided by the programmable metasurface (700, 802, 904, 1015, 1119, 1206, 1207, 1208, 1801) associated with the virtual programmable metasurface (807),
**characterized in that**
the communication resources comprise time slots, frequency ranges and/or phases for communicating via the programmable metasurface (700, 802, 904, 1015, 1119, 1206, 1207, 1208, 1801) and wherein it is ensured that communication functions requested to be provided by different ones of the virtual programmable metasurfaces (807) are provided by different portions of the communication resources provided by the programmable metasurface (700, 802, 904, 1015, 1119, 1206, 1207, 1208, 1801) by time multiplexing, frequency multiplexing and/or phase multiplexing, respectively.

## Patentansprüche

1. Ein Kommunikationssystem (100, 1800) aufweisend:
eine programmierbare Meta-Oberfläche (700, 802, 904, 1015, 1119, 1206, 1207, 1208, 1801), die so konfiguriert ist, dass sie Kommunikationsressourcen bereitstellt; und
einen Prozessor, der so konfiguriert ist, dass er eine Meta-Oberflächen-Virtualisierungskomponente (1802) implementiert, die konfiguriert ist
mehrere virtuelle programmierbare Meta-Oberflächen (807) zu erstellen, wobei jede virtuelle programmierbare Meta-Oberfläche mit einem entsprechenden Teil der Kommunikationsressourcen, die von der programmierbaren Meta-Oberfläche (700, 802, 904, 1015, 1119, 1206, 1207, 1208, 1801) bereitgestellt werden, assoziiert ist;
die virtuellen programmierbaren Meta-Oberflächen (807) einer oder mehreren Verwaltungskomponenten als Ressource zur Verfügung zu stellen, um eine oder mehrere Kommunikationsfunktionen bereitzustellen; und
für jede virtuelle programmierbare Meta-Oberfläche (807), für die die eine oder mehreren Verwaltungskomponenten die Bereitstellung einer jeweiligen Kommunikationsfunktion angefordert haben, die programmierbare Meta-Oberfläche (700, 802, 904, 1015, 1119, 1206, 1207, 1208, 1801) so zu steuern, dass sie die angeforderte Kommunikationsfunktion mit Hilfe des Teils der Kommunikationsressourcen, die von der programmierbaren Meta-Oberfläche (700, 802, 904, 1015, 1119, 1206, 1207, 1208, 1801) bereitgestellt werden, der mit der virtuellen programmierbaren Meta-Oberfläche (807) assoziiert ist, bereitstellt
**dadurch gekennzeichnet, dass**
die Kommunikationsressourcen Zeitschlitze, Frequenzbereiche und/oder Phasen für die Kommunikation über die programmierbare Meta-Oberfläche (700, 802, 904, 1015, 1119, 1206, 1207, 1208, 1801) aufweisen, und wobei die Meta-Oberflächen-Virtualisierungskomponente (1802) so konfiguriert ist, dass sie durch Zeitmultiplexing, Frequenzmultiplexing bzw. Phasenmultiplexing sicherstellt, dass Kommunikationsfunktionen, für die angefordert wurde, dass sie von unterschiedlichen der virtuellen programmierbaren Meta-Oberflächen (807) bereitgestellt werden, von unterschiedlichen Teilen der Kommunikationsressourcen, die von der programmierbaren Meta-Oberfläche (700, 802, 904, 1015, 1119, 1206, 1207, 1208, 1801) bereitgestellt werden, bereitgestellt werden.

2. Das Kommunikationssystem (100, 1800) nach Anspruch 1, wobei die Kommunikationsressourcen für die Kommunikation über die programmierbare Meta-Oberfläche (700, 802, 904, 1015, 1119, 1206, 1207, 1208, 1801) Frequenzbereiche, Zeitschlitze und/oder Teilmengen von Ressourcen wie Meta-Atome der programmierbaren Meta-Oberfläche (700, 802, 904, 1015, 1119, 1206, 1207, 1208, 1801) aufweisen.

3. Das Kommunikationssystem (100, 1800) nach Anspruch 1 oder 2, wobei die virtuellen programmierbaren Meta-Oberflächen (807) mit unterschiedlichen Teilen der Kommunikationsressourcen assoziiert sind, die von der programmierbaren Meta-Oberfläche (700, 802, 904, 1015, 1119, 1206, 1207, 1208, 1801) bereitgestellt werden.

4. Das Kommunikationssystem (100, 1800) nach einem der Ansprüche 1 bis 3, wobei die Meta-Oberflächen-Virtualisierungskomponente (1802) so konfiguriert ist, dass sie mindestens eine der mehreren virtuellen programmierbaren Meta-Oberflächen (807) auf eine entsprechende Anforderung von der einen oder den mehreren Verwaltungskomponenten zur Erzeugung eines mehrfachen virtuellen programmierbaren Meta-Oberfläche (807) hin erzeugt.

5. Das Kommunikationssystem (100, 1800) nach Anspruch 4, wobei die Meta-Oberflächen-Virtualisierungskomponente (1802) so konfiguriert ist, dass sie Kommunikationsressourcen, die von der programmierbaren Meta-Oberfläche (700, 802, 904, 1015, 1119, 1206, 1207, 1208, 1801) bereitgestellt werden, mit der mindestens einen der mehreren virtuellen programmierbaren Meta-Oberfläche (807) assoziiert, um ein in der Anforderung angegebenes Erfordernis zu erfüllen.

6. Das Kommunikationssystem (100, 1800) nach einem der Ansprüche 1 bis 5, wobei die Meta-Oberflächen-Virtualisierungskomponente (1802) so konfiguriert ist, dass sie für mindestens eine der mehreren virtuellen programmierbaren Meta-Oberflächen (807) die Assoziierung von Kommunikationsressourcen, die von dem programmierbaren Meta-Oberfläche (700, 802, 904, 1015, 1119, 1206, 1207, 1208, 1801) bereitgestellt werden, zu der mindestens einen der virtuellen programmierbaren Meta-Oberflächen (807) ändert.

7. Das Kommunikationssystem (100, 1800) nach einem der Ansprüche 1 bis 6, das mehrere programmierbare Meta-Oberflächen (700, 802, 904, 1015, 1119, 1206, 1207, 1208, 1801) aufweist, wobei die Meta-Oberflächen-Virtualisierungskomponente (1802) so konfiguriert ist, dass sie die virtuellen programmierbaren Meta-Oberflächen (807) so erzeugt, dass jede virtuelle programmierbare Meta-Oberfläche mit einem jeweiligen Teil der Kommunikationsressourcen assoziiert ist, die von den programmierbaren Meta-Oberflächen (700, 802, 904, 1015, 1119, 1206, 1207, 1208, 1801) bereitgestellt werden, wobei mindestens eine der virtuellen programmierbaren Meta-Oberfläche (807) mit Kommunikationsressourcen assoziiert ist, die von unterschiedlichen der programmierbaren Meta-Oberflächen (700, 802, 904, 1015, 1119, 1206, 1207, 1208, 1801) bereitgestellt werden.

8. Das Kommunikationssystem (100, 1800) nach Anspruch 7, wobei die Meta-Oberflächen-Virtualisierungskomponente (1802) so konfiguriert ist, dass sie für mindestens eine der mehreren virtuellen programmierbaren Meta-Oberflächen (807) die Assoziierung von Kommunikationsressourcen, die von den programmierbaren Meta-Oberflächen (700, 802, 904, 1015, 1119, 1206, 1207, 1208, 1801) bereitgestellt werden, mit der mindestens einen der virtuellen programmierbaren Meta-Oberflächen (807) ändert, so dass die Menge der von einer der programmierbaren Meta-Oberflächen (700, 802, 904, 1015, 1119, 1206, 1207, 1208, 1801) bereitgestellten Kommunikationsressourcen, die mit der mindestens einen der virtuellen programmierbaren Meta-Oberflächen (807) assoziiert ist, erhöht oder verringert wird.

9. Das Kommunikationssystem (100, 1800) nach einem der Ansprüche 1 bis 8, wobei die Meta-Oberflächen-Virtualisierungskomponente (1802) so konfiguriert ist, dass sie Fähigkeiten der programmierbaren Meta-Oberflächen (700, 802, 904, 1015, 1119, 1206, 1207, 1208, 1801) und der virtuellen programmierbaren Meta-Oberflächen (807) für die eine oder mehrere Verwaltungskomponenten exponiert.

10. Das Kommunikationssystem (100, 1800) nach einem der Ansprüche 1 bis 9, wobei die Meta-Oberflächen-Virtualisierungskomponente (1802) so konfiguriert ist, dass sie jede virtuelle programmierbare Meta-Oberfläche (807) einem jeweiligen Inhaber zuweist, der von einem jeweiligen der einen oder mehreren Verwaltungssysteme verwaltet wird.

11. Das Kommunikationssystem (100, 1800) nach einem der Ansprüche 1 bis 10, wobei das Kommunikationssystem (100, 1800) mehrere Netzwerk-Slices aufweist und zumindest einige der einen oder mehreren Verwaltungssysteme Verwaltungssysteme für unterschiedliche Netzwerk-Slices sind.

12. Das Kommunikationssystem (100, 1800) nach Anspruch 11, wobei die Meta-Oberflächen-Virtualisierungskomponente (1802) so konfiguriert ist, dass sie die virtuellen programmierbaren Meta-Oberflächen (807) unterschiedlichen Netzwerk-Slices zuweist.

13. Ein Verfahren zur Verwendung einer programmierbaren Meta-Oberfläche (700, 802, 904, 1015, 1119, 1206, 1207, 1208, 1801) in einem Kommunikationssystem (100, 1800), aufweisend:
Erzeugen mehrerer virtueller programmierbarer Meta-Oberflächen (807), wobei jede virtuelle programmierbare Meta-Oberfläche (807) mit einem entsprechenden Teil der Kommunikationsressourcen, die von der programmierbaren Meta-Oberfläche (700, 802, 904, 1015, 1119, 1206, 1207, 1208, 1801) bereitgestellt werden, assoziiert ist;
die virtuellen programmierbaren Meta-Oberflächen (807) einer oder mehreren Verwaltungskomponenten als Ressource zur Verfügung stellen, um eine oder mehrere Kommunikationsfunktionen bereitzustellen;
für jede virtuelle programmierbare Meta-Oberfläche (807), für die die eine oder mehrere Verwaltungskomponenten die Bereitstellung einer jeweiligen Kommunikationsfunktion anfordern, Steuern der programmierbaren Meta-Oberfläche (700, 802, 904, 1015, 1119, 1206, 1207, 1208, 1801), um die angeforderte Kommunikationsfunktion mittels des Teils der Kommunikationsressourcen, die von der programmierbaren Meta-Oberfläche (700, 802, 904, 1015, 1119, 1206, 1207, 1208, 1801) bereitgestellt werden, der mit der virtuellen programmierbaren Meta-Oberfläche (807) assoziiert ist, bereitzustellen
**dadurch gekennzeichnet, dass**
die Kommunikationsressourcen Zeitschlitze, Frequenzbereiche und/oder Phasen für die Kommunikation über die programmierbare Meta-Oberfläche (700, 802, 904, 1015, 1119, 1206, 1207, 1208, 1801) aufweisen, und wobei durch Zeitmultiplexing, Frequenzmultiplexing bzw. Phasenmultiplexing sichergestellt wird, dass Kommunikationsfunktionen, für die angefordert wurde, dass sie von unterschiedlichen der virtuellen programmierbaren Meta-Oberflächen (807) bereitgestellt werden, von unterschiedlichen Teilen der Kommunikationsressourcen, die von der programmierbaren Meta-Oberfläche (700, 802, 904, 1015, 1119, 1206, 1207, 1208, 1801) bereitgestellt werden, bereitgestellt werden.

## Revendications

1. Système de communication (100, 1800) comprenant :
une métasurface programmable (700, 802, 904, 1015, 1119, 1206, 1207, 1208, 1801) configurée pour fournir des ressources de communication ; et
un processeur configuré pour mettre en œuvre un composant de virtualisation de métasurface (1802) configuré pour
créer plusieurs métasurfaces programmables virtuelles (807), dans lequel chaque métasurface programmable virtuelle est associée à une partie respective des ressources de communication fournies par la métasurface programmable (700, 802, 904, 1015, 1119, 1206, 1207, 1208, 1801) ;
exposer les métasurfaces programmables virtuelles (807) à un ou plusieurs composants de gestion en tant que ressource pour fournir une ou plusieurs fonctions de communication ; et
pour chaque métasurface programmable virtuelle (807) pour laquelle le ou les composants de gestion ont demandé la fourniture d'une fonction de communication respective, contrôler la métasurface programmable (700, 802, 904, 1015, 1119, 1206, 1207, 1208, 1801) afin de fournir la fonction de communication demandée au moyen de la partie des ressources de communication fournies par la métasurface programmable (700, 802, 904, 1015, 1119, 1206, 1207, 1208, 1801) associées à la métasurface programmable virtuelle (807), **caractérisé en ce que**
les ressources de communication comprennent des intervalles de temps, des plages de fréquences et/ou des phases pour communiquer via la métasurface programmable (700, 802, 904, 1015, 1119, 1206, 1207, 1208, 1801) et dans lequel le composant de virtualisation de métasurface (1802) est configuré pour garantir que les fonctions de communication demandées à différentes métasurfaces programmables virtuelles (807) sont fournies par différentes parties des ressources de communication fournies par la métasurface programmable (700, 802, 904, 1015, 1119, 1206, 1207, 1208, 1801). (807) sont fournies par différentes parties des ressources de communication fournies par la métasurface programmable (700, 802, 904, 1015, 1119, 1206, 1207, 1208, 1801) par multiplexage temporel, multiplexage fréquentiel et/ou multiplexage de phase, respectivement.

2. Système de communication (100, 1800) selon la revendication 1, dans lequel les ressources de communication pour communiquer via la métasurface programmable (700, 802, 904, 1015, 1119, 1206, 1207, 1208, 1801) comprennent des gammes de fréquences, des intervalles de temps et/ou des sous-ensembles de ressources telles que des méta-atomes de la métasurface programmable (700, 802, 904, 1015, 1119, 1206, 1207, 1208, 1801).

3. Système de communication (100, 1800) selon la revendication 1 ou 2, dans lequel les métasurfaces programmables virtuelles (807) sont associées à différentes parties des ressources de communication fournies par la métasurface programmable (700, 802, 904, 1015, 1119, 1206, 1207, 1208, 18 01).

4. Système de communication (100, 1800) selon l'une quelconque des revendications 1 à 3, dans lequel le composant de virtualisation de métasurface (1802) est configuré pour créer au moins l'une des multiples métasurfaces programmables virtuelles (807) sur une demande respective provenant du ou des composants de gestion pour la création d'une métasurface programmable virtuelle multiple (807).

5. Système de communication (100, 1800) selon la revendication 4, dans lequel le composant de virtualisation de métasurface (1802) est configuré pour associer des ressources de communication fournies par la métasurface programmable (700, 802, 904, 1015, 1119, 1206, 1207, 1208, 1801) avec la au moins une des multiples métasurfaces programmables virtuelles (807) pour satisfaire une exigence spécifiée dans la demande.

6. Système de communication (100, 1800) selon l'une quelconque des revendications 1 à 5, dans lequel le composant de virtualisation de métasurface (1802) est configuré pour modifier, pour au moins une des multiples métasurfaces programmables virtuelles (807), l'association des ressources de communication fournies par la métasurface programmable (700, 802, 904, 1015, 1119, 1206, 1207, 1208, 1801) avec au moins l'une des métasurfaces virtuelles programmables (807).

7. Système de communication (100, 1800) selon l'une quelconque des revendications 1 à 6, comprenant plusieurs métasurfaces programmables (700, 802, 904, 1015, 1119, 1206, 1207, 1208, 1801), dans lequel le composant de virtualisation de métasurface (1802) est configuré pour créer les métasurfaces programmables virtuelles (807) de telle sorte que chaque métasurface programmable virtuelle soit associée à une partie respective des ressources de communication fournies par les métasurfaces programmables (700, 802, 904, 1015, 1119, 1206, 1207, 1208, 1801), dans lequel au moins une des métasurfaces programmables virtuelles (807) est associée à des ressources de communication fournies par différentes métasurfaces programmables (700, 802, 904, 1015, 1119, 1206, 1207, 1208, 1801).

8. Système de communication (100, 1800) selon la revendication 7, dans lequel le composant de virtualisation de métasurface (1802) est configuré pour modifier, pour au moins l'une des multiples métasurfaces programmables virtuelles (807), l'association des ressources de communication fournies par les métasurfaces programmables (700, 802, 904, 1015, 1119, 1206, 1207, 1208, 1801) avec la au moins une des métasurfaces programmables virtuelles (807) de telle sorte que la quantité de ressources de communication fournies par l'une des métasurfaces programmables ( 700, 802, 904, 1015, 1119, 1206, 1207, 1208, 1801) associée à la au moins une des métasurfaces programmables virtuelles (807) est augmentée ou diminuée.

9. Système de communication (100, 1800) selon l'une quelconque des revendications 1 à 8, dans lequel le composant de virtualisation de métasurface (1802) est configuré pour exposer les capacités des métasurfaces programmables (700, 802, 904, 1015, 1119, 1206, 1207, 1208, 1801 ) et les métasurfaces programmables virtuelles (807) à un ou plusieurs composants de gestion.

10. Système de communication (100, 1800) selon l'une quelconque des revendications 1 à 9, dans lequel le composant de virtualisation de métasurface (1802) est configuré pour allouer chaque métasurface programmable virtuelle (807) à un locataire respectif géré par un système respectif parmi le ou les systèmes de gestion.

11. Système de communication (100, 1800) selon l'une quelconque des revendications 1 à 10, dans lequel le système de communication (100, 1800) comprend plusieurs tranches de réseau et au moins certains des un ou plusieurs systèmes de gestion sont des systèmes de gestion pour différentes tranches de réseau.

12. Système de communication (100, 1800) selon la revendication 11, dans lequel le composant de virtualisation de métasurface (1802) est configuré pour attribuer les métasurfaces programmables virtuelles (807) à différentes tranches de réseau.

13. Procédé d'utilisation d'une métasurface programmable (700, 802, 904, 1015, 1119, 1206, 1207, 1208, 1801) dans un système de communication (100, 1800), comprenant : la création de multiples métasurfaces programmables virtuelles (807), dans lequel chaque métasurface programmable virtuelle (807) est associée à une partie respective de ressources de communication fournies par la métasurface programmable (700, 802, 904, 1015, 1119, 1206, 1207, 1208, 1801) ;
l'exposition des métasurfaces programmables virtuelles (807) à un ou plusieurs composants de gestion en tant que ressource pour fournir une ou plusieurs fonctions de communication ;
pour chaque métasurface programmable virtuelle (807) pour laquelle le ou les composants de gestion demandent la fourniture d'une fonction de communication respective, contrôler la métasurface programmable (700, 802, 904, 1015, 1119, 1206, 1207, 1208, 1801) afin de fournir la fonction de communication demandée au moyen de la partie des ressources de communication fournies par la métasurface programmable (700, 802, 904, 1015 , 1119, 1206, 1207, 1208, 1801) associées à la métasurface programmable virtuelle (807), **caractérisé en ce que**
les ressources de communication comprennent des intervalles de temps, gammes de fréquences et/ou des phases pour communiquer via la métasurface programmable (700, 802, 904, 1015, 1119, 1206, 1207, 1208, 1801) et dans lequel il est garanti que les fonctions de communication dont la fourniture est demandée par différentes métasurfaces programmables virtuelles (807) sont fournies par différentes parties de la ressources de communication fournies par la métasurface programmable (700, 802, 904, 1015, 1119, 1206, 1207, 1208, 1801) par multiplexage temporel, multiplexage fréquentiel et/ou multiplexage de phase, respectivement.
